# DEMANDE DE BREVET EUROPEEN

(11) **EP 3 409 535 A1**
(43) Date de publication de la demande: **05.12.2018**
(21) Numéro de dépôt: 18176355.8
(22) Date de dépôt: 06.06.2018
(51) Int. Cl.: B60N 2/34, B60P 3/32

(54) **SIEGE CONVERTIBLE POUR VEHICULE DE LOISIRS**

(30) Priorité: 09.06.2017 FR 1755179
(71) Demandeur: Trigano VDL, 75019 Paris (FR)
(72) Inventeur: CLEMENSON, Jérôme, 07290 ARDOIX (FR); PRAT, Isabelle, 26250 LIVRON (FR); JOB, Guy, 26800 Etoile (FR)
(74) Mandataire: Gevers & Orès

(57) **Abrégé**

L'invention concerne un siège convertible (10) pour véhicule de loisirs (100), comprenant :
- un premier caisson (11),
- une armature (12) comprenant une armature inférieure (15) logée dans le premier caisson et une armature supérieure (16) comprenant une première et une deuxième faces (18a, 18b) planes, opposées et parallèles, l'armature supérieure (16) étant montée pivotante sur l'armature inférieure (15) autour d'un axe de pivotement (17) horizontal entre une position relevée dans laquelle la première face étant agencée globalement verticalement, de sorte à former un dossier de siège, et une position rabattue dans laquelle la deuxième face étant agencée horizontalement et orientée dans une direction opposée au premier caisson, de sorte à former une assise de banquette,
le premier caisson comprenant une paroi supérieure (19) horizontale à travers laquelle s'étend l'armature supérieure, la paroi supérieure formant une assise de siège, lorsque l'armature supérieure est en position relevée, et étant agencée en regard de la première face de l'armature supérieure, lorsque l'armature supérieure est en position rabattue par-dessus la paroi supérieure du premier caisson.

## Description

### DOMAINE TECHNIQUE

L'invention concerne un siège convertible pour véhicule de loisirs, notamment pouvant être utilisé comme siège lors du roulage du véhicule de loisirs et comme banquette lorsque le véhicule de loisirs est à l'arrêt.

### ETAT DE L'ART

Le document DE 10 2010 028 210 A1 décrit un exemple de siège convertible pour véhicule de loisirs comprenant un caisson et une armature.

Le caisson comprend une pluralité de parois latérales verticales définissant une ouverture supérieure du caisson. Le caisson est attenant à une paroi verticale de véhicule de loisirs.

L'armature comprend une partie inférieure logée dans le caisson et une partie supérieure montée pivotante sur la partie inférieure de l'armature autour d'un axe de pivotement, entre une position relevée dans laquelle la partie supérieure de l'armature est agencée globalement verticalement et fait saillie hors du caisson, et une position rabattue dans laquelle la partie supérieure de l'armature est agencée globalement horizontalement, à l'intérieur du caisson. Ainsi, en position rabattue, les parties supérieure et inférieure de l'armature sont toutes deux logées dans le caisson.

Le siège convertible comprend en outre un premier et un deuxième coussins.

Lorsque la partie supérieure de l'armature est en position relevée, le premier coussin recouvre le caisson, notamment l'ouverture supérieure du caisson, de sorte à former une assise de siège.

Lorsque la partie supérieure de l'armature est en position rabattue et est logée à l'intérieur du caisson, ce premier coussin recouvre aussi le caisson, notamment l'ouverture supérieure du caisson, de sorte à former une assise de banquette. Le premier coussin est alors agencé en regard d'une première face plane de la partie supérieure de l'armature, orientée vers l'extérieur du caisson.

Lorsque la partie supérieure de l'armature est en position relevée, le deuxième coussin est placé contre une deuxième face plane de l'armature, opposée à la première face, de sorte à former avec l'armature un dossier de siège.

Lorsque la partie supérieure de l'armature est en position rabattue, ce deuxième coussin est placé contre la paroi verticale du véhicule de loisirs, de sorte à former un dossier de banquette.

Ainsi, le siège convertible peut passer d'une configuration de siège, notamment prévue pour le roulage du véhicule de loisirs, dans laquelle la partie supérieure de l'armature est en position relevée et les premier et deuxième coussins sont placés de sorte à former une assise et un dossier de siège, à une configuration de banquette, notamment prévue pour une utilisation à l'arrêt du véhicule de loisirs, dans laquelle la partie supérieure de l'armature est en position horizontale rabattue et les premier et deuxième coussins sont placés de sorte à former une assise et un dossier de la banquette.

Or, avec un tel siège convertible, le positionnement du premier coussin pour refermer le caisson, lorsque la partie supérieure de l'armature est en position relevée peut poser problème. En effet, à défaut d'un centrage correct et minutieux du premier coussin par rapport à l'ouverture supérieure du caisson, il existe un risque que le premier coussin bascule à l'intérieur ou l'extérieur du caisson, lorsqu'un utilisateur s'assoit dessus. Ce basculement du premier coussin peut en outre entraîner un basculement de l'utilisateur, voire même sa chute du siège.

Cette situation n'est donc pas acceptable en termes de sécurité pour les utilisateurs. Par ailleurs, les manipulations exigées pour centrer correctement le premier coussin par rapport à l'ouverture supérieure du caisson sont contraignantes pour l'utilisateur.

### PRESENTATION DE L'INVENTION

La présente invention a pour but de pallier les inconvénients précédemment cités en proposant un siège convertible pour véhicule de loisirs plus facilement manipulable et plus sûr pour des utilisateurs.

Plus précisément, l'invention a pour objet un siège convertible pour véhicule de loisirs, comprenant :
- un premier caisson comprenant des parois s'étendant globalement verticalement, le premier caisson étant destiné à être attenant à une paroi globalement verticale du véhicule de loisirs, de sorte à délimiter avec les parois du premier caisson un espace intérieur du premier caisson,
- une armature comprenant une armature inférieure au moins en partie logée dans l'espace intérieur du premier caisson et une armature supérieure comprenant une première et une deuxième faces planes et opposées, l'armature supérieure étant montée pivotante sur l'armature inférieure autour d'un axe de pivotement horizontal entre une position relevée et une position rabattue, la première face étant agencée globalement verticalement, lorsque l'armature supérieure est en position relevée, de sorte à former un dossier de siège, la deuxième face étant agencée horizontalement et orientée dans une direction opposée au premier caisson, lorsque l'armature supérieure est en position rabattue, de sorte à former une assise de banquette.

Selon l'invention, le premier caisson comprend une paroi supérieure horizontale fermant le premier caisson et à travers lequel s'étend l'armature supérieure, la paroi supérieure formant une assise de siège, lorsque l'armature supérieure est en position relevée, et étant agencée en regard de la première face de l'armature supérieure, lorsque l'armature supérieure est en position rabattue par-dessus la paroi supérieure du premier caisson.

Selon différents modes de réalisation de l'invention, qui pourront être pris ensemble ou séparément :
- le siège convertible comprend un premier coussin amovible conçu :
   ∘ pour être placé sur la deuxième face de l'armature supérieure, lorsque l'armature supérieure est en position rabattue, de sorte à former un coussin d'assise de banquette,
      et/ou
   ∘ pour être placé sur la paroi supérieure du premier caisson, lorsque l'armature supérieure est en position relevée, de sorte à former coussin d'assise de siège ;
- le siège convertible comprend un deuxième coussin amovible :
   ∘ destiné à être placé contre la paroi verticale du véhicule de loisirs, lorsque l'armature supérieure est en position rabattue, de sorte à former un coussin de dossier de banquette,
      et/ou
   ∘ conçu pour être placé contre la première face de l'armature supérieure, lorsque l'armature supérieure est en position relevée, de sorte à former un coussin de dossier de siège ;
- l'armature comprend un système de ceinture de sécurité ;
- le système de ceinture de sécurité comprend :
   ∘ un boîtier comprenant un mécanisme de verrouillage, le boîtier étant fixé sur l'armature inférieure, d'un premier côté d'un plan vertical, perpendiculaire à l'axe de pivotement de l'armature supérieure,
   ∘ un pêne conçu pour s'engager avec le mécanisme de verrouillage du boîtier,
   ∘ une sangle sur laquelle le pêne est monté coulissant, la sangle étant fixée à chacune de ses première et deuxième extrémités sur l'armature inférieure d'un deuxième côté du plan vertical ;
- le système de ceinture de sécurité comprend un enrouleur par l'intermédiaire duquel la première extrémité de la sangle est fixée sur l'armature inférieure, la première extrémité de la sangle étant enroulée autour de l'enrouleur ;
- un guide de sangle monté sur l'armature supérieure, notamment sur un bord supérieur de l'armature supérieure, du deuxième côté du plan, et recevant la sangle en coulissement entre ses première et deuxième extrémités ;
- le siège convertible comprend un deuxième caisson destiné à être attenant à la paroi verticale du véhicule de loisirs, le deuxième caisson étant agencé en regard et à distance du premier caisson suivant une direction longitudinale horizontale, de sorte à former un espace libre entre les premier et deuxième caissons, cet espace libre étant au moins en partie recouvert par l'armature supérieure, lorsque l'armature supérieure est en position rabattue ;
- le deuxième caisson comprend une paroi supérieure horizontale présentant une face supérieure plane agencée dans un même plan que la deuxième face de l'armature supérieure, lorsque l'armature supérieure est en position rabattue, de sorte que la paroi supérieure du deuxième caisson forme une assise de banquette avec la deuxième face de l'armature supérieure ;
- le siège convertible comprend un volet monté pivotant sur le premier caisson autour d'un axe de pivotement vertical entre une position de fermeture dans laquelle le volet ferme, transversalement par rapport à la direction longitudinale, l'accès à l'espace libre et une position d'ouverture dans laquelle le volet libère l'accès à l'espace libre ;
- le siège convertible comprend un troisième coussin amovible conçu pour être placé en partie sur la paroi supérieure du deuxième caisson et en partie sur la deuxième face de l'armature supérieure, lorsque l'armature supérieure est en position rabattue, de sorte à former un coussin d'assise de banquette ;
- le siège convertible comprend un appui-tête monté sur l'armature supérieure, l'appui-tête comprenant une face plane agencée dans un même plan que la deuxième face de l'armature supérieure de sorte que, lorsque l'armature supérieure est en position rabattue, la deuxième face de l'armature supérieure et la face de l'appui-tête forment ensemble une assise de banquette.

L'invention concerne aussi un véhicule de loisirs comprenant une paroi globalement verticale et un siège convertible tel que précédemment décrit.

### PRESENTATION DES FIGURES

D'autres caractéristiques et avantages de l'invention apparaîtront à la lecture de la description détaillée qui suit pour la compréhension de laquelle on se reportera aux figures annexées parmi lesquelles :
- la figure 1 est une vue partielle, en perspective, d'un véhicule de loisirs comprenant un siège convertible selon un mode de réalisation de l'invention, en configuration de banquette avec ses coussins ;
- la figure 2 est une vue partielle, en perspective, du véhicule de loisirs illustré à la figure 1, le siège convertible étant en configuration de banquette et des coussins ayant été retirés ;
- la figure 3 est une vue partielle, en perspective, du véhicule de loisirs illustré aux figures 1 et 2, le siège convertible étant en configuration de siège avec ses coussins ;
- la figure 4 est une vue partielle, en perspective suivant une première orientation, du véhicule de loisirs illustré aux figures 1 à 3, le siège convertible étant en configuration de siège et tous les coussins ayant été retirés ;
- la figure 5 est une vue partielle, en perspective suivant une deuxième orientation, du véhicule de loisirs illustré aux figures 1 à 4, le siège convertible étant en configuration de siège et tous les coussins ayant été retirés ;
- la figure 6 est une vue en perspective d'une armature du siège convertible illustré aux figures 1 à 5.

### DESCRIPTION DETAILLEE

On adoptera à titre non limitatif un repère orthogonal comprenant une direction longitudinale L vers l'avant du véhicule de loisirs, une direction transversale horizontale T et une direction verticale V vers le haut.

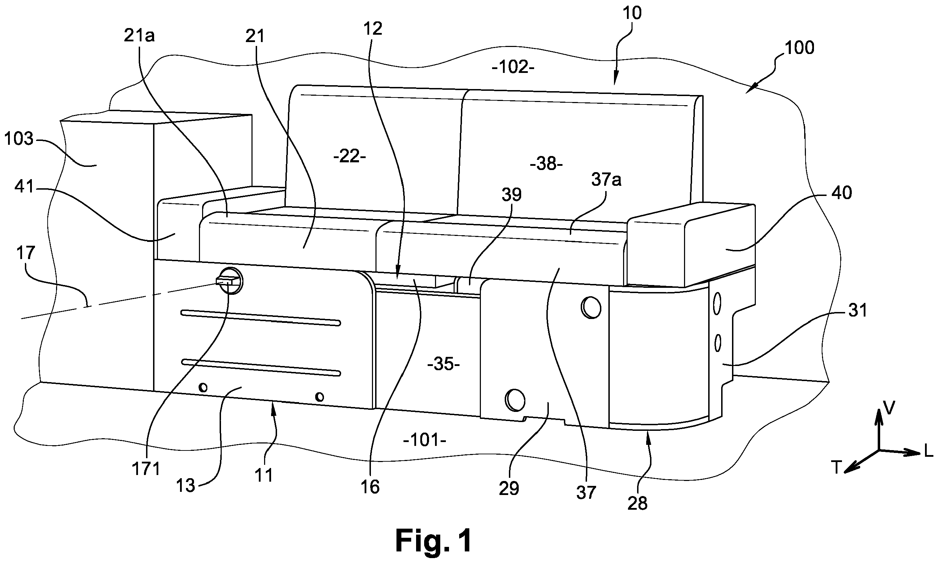

Les figures 1 à 5 montrent un véhicule de loisirs 100 comprenant un siège convertible 10 selon un mode de réalisation de l'invention.

Le véhicule de loisirs 100 comprend un plancher 101 horizontal et au moins une paroi globalement verticale 102 s'étendant depuis le plancher 101. La paroi verticale 102 est par exemple une paroi latérale verticale.

La paroi verticale 102 est par exemple agencée parallèlement à la direction longitudinale L. La paroi verticale 102 est ici la paroi gauche en considérant la direction longitudinale L vers l'avant du véhicule de loisirs 100.

La paroi verticale 102 peut en variante être agencée parallèlement à la direction transversale T.

Le véhicule de loisirs 100 peut être un camping-car ou encore une caravane.

Le siège convertible 10 comprend un premier caisson 11 et une armature 12.

Le premier caisson 11 comprend des parois 13, 14 s'étendant globalement verticalement.

Le premier caisson 11 est attenant à la paroi verticale 102 du véhicule de loisirs 100, la paroi verticale 102 du véhicule de loisirs 100 définissant ou délimitant avec les parois 13, 14 un espace intérieur du premier caisson 11.

Le premier caisson 11 comprend par exemple une première paroi 13 latérale agencée parallèlement à la paroi verticale 102 du véhicule de loisirs 100 et une deuxième paroi 14 transversale agencée perpendiculairement à la première paroi 13 latérale et reliant la première paroi 13 latérale à la paroi verticale 102 du véhicule de loisirs 100.

Le premier caisson 11 peut en outre être attenant à un meuble 103 du véhicule de loisirs 100 présentant une paroi verticale parallèle à la deuxième paroi 14 , les première et deuxième parois 13, 14, la paroi verticale 102 du véhicule de loisirs 100 et la paroi du meuble 103 définissant ou encore délimitant ensemble l'espace intérieur du premier caisson 11.

Le meuble 103 est par exemple situé à l'arrière du siège convertible 10 suivant la direction longitudinale L.

L'espace intérieur du premier caisson 11 forme par exemple un premier espace de stockage, notamment pour un réservoir d'eau, des effets personnels d'un ou des utilisateurs, des éléments de chauffages ou encore des appareils électriques, tels que des transformateurs, des disjoncteurs, etc..

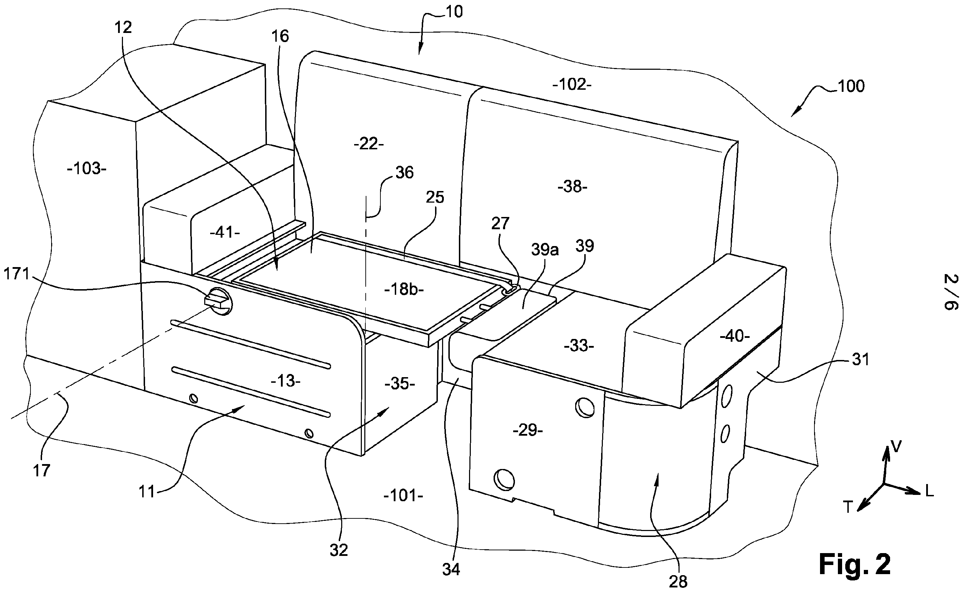

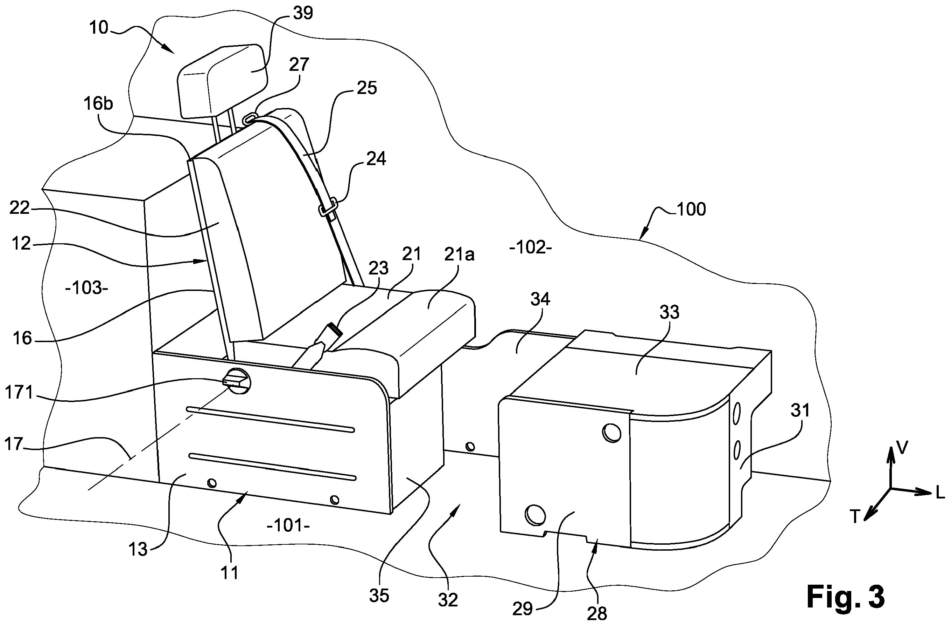

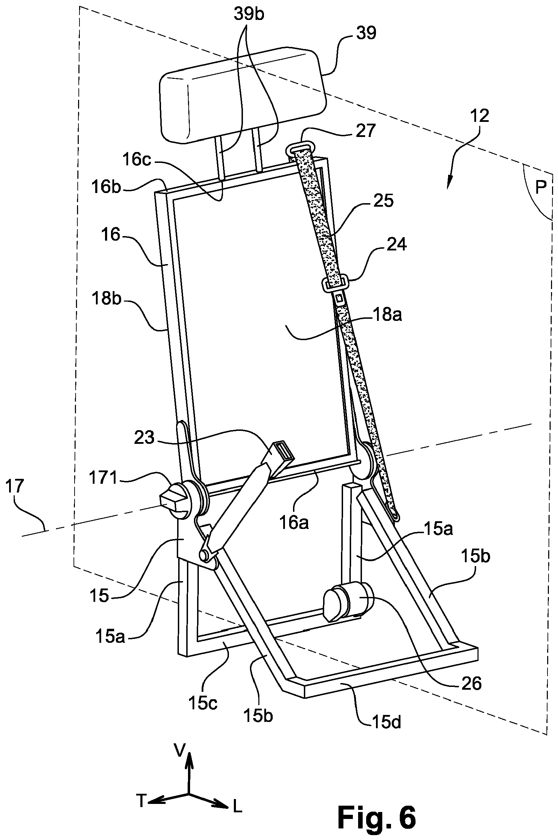

L'armature 12 comprend une partie inférieure 15, dite armature inférieure, au moins en partie logée dans l'espace intérieur du premier caisson 11 et une partie supérieure 16, dite armature supérieure, montée pivotante sur l'armature inférieure 15 autour d'un axe de pivotement 17 horizontal entre une position relevée (figures 3 à 6) et une position rabattue (figures 1 et 2). L'armature 12 est montrée seule à la figure 6.

L'armature inférieure 15 est fixe par rapport au premier caisson 11.

L'armature supérieure 16 est par exemple montée pivotante sur l'armature inférieure 15 par l'intermédiaire d'un bord inférieur 16a, parallèle à l'axe de pivotement 17.

L'axe de pivotement 17 est par exemple parallèle à la direction transversale T. L'axe de pivotement 17 peut en outre être agencé à l'arrière du premier caisson 11, notamment au voisinage du meuble 103, suivant la direction longitudinale L.

On entend par « agencé à l'arrière » le fait que l'axe de pivotement 17 est situé plus à l'arrière qu'à l'avant du premier caisson 11 suivant la direction longitudinale L ou encore que l'axe de pivotement 17 est décalée vers l'arrière du premier caisson 11 suivant la direction longitudinale L.

Le siège convertible 10 comprend par exemple un bouton de déverrouillage 171 conçu pour autoriser le pivotement de l'armature supérieure 16 autour de l'axe de pivotement 17 dans une position déverrouillée et pour bloquer le pivotement de l'armature supérieure 16 autour de l'axe de pivotement 17 dans une position verrouillée.

Le bouton de déverrouillage 171 est monté pivotant sur l'armature inférieure 15 autour de l'axe de pivotement 17 dans un premier sens de pivotement de la position déverrouillée à la position verrouillée et dans un deuxième sens de pivotement opposée de la position verrouillée à la position déverrouillée.

Ainsi, pour pivoter l'armature supérieure 16 de la position relevée à la position rabattue ou l'inverse, l'utilisateur doit d'abord pivoter le bouton de déverrouillage 171 dans le deuxième sens de pivotement de la position verrouillée à la position déverrouillée, afin d'autoriser le pivotement de l'armature supérieure 16, puis pivoter l'armature supérieure 16. Lorsque l'armature supérieure 16 atteint la position souhaitée, l'utilisateur pivote de bouton de déverrouillage 171 dans le premier sens de pivotement de la position déverrouillée à la position verrouillée, afin de bloquer le pivotement de l'armature supérieure 16.

Un organe de rappel élastique peut encore être prévu pour rappeler le bouton de déverrouillage 171 en pivotement dans le premier sens de pivotement vers la position verrouillée.

Le bouton de déverrouillage 171 est par exemple monté pivotant sur l'armature inférieure 15 à travers le premier caisson 11, notamment à travers la première paroi 13 du premier caisson 11 (figures 1 à 4).

De cette manière, le bouton de déverrouillage 171 est facilement accessible pour l'utilisateur.

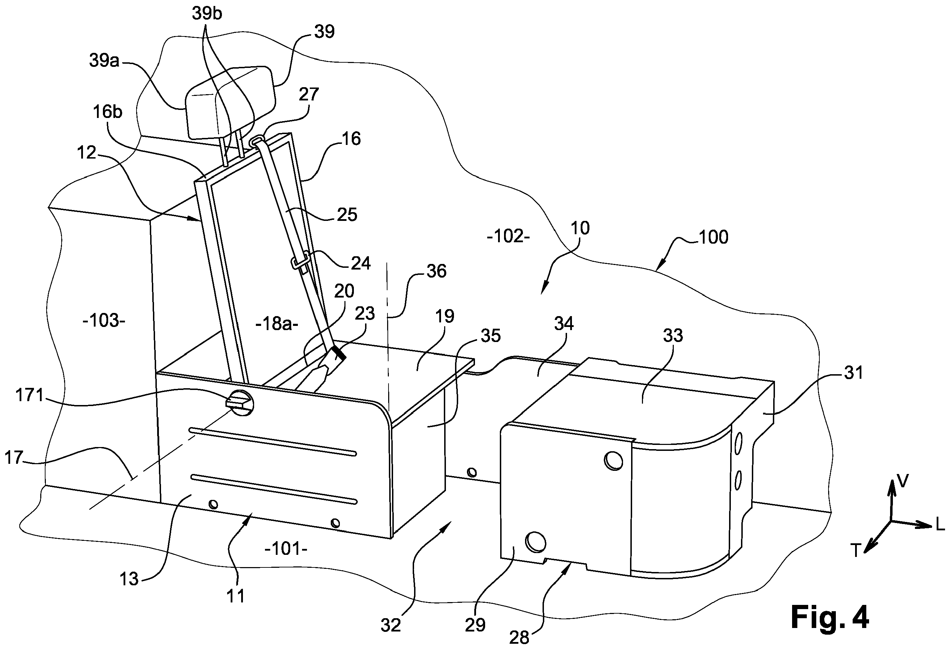

L'armature supérieure 16 comprend une première face plane 18a agencée perpendiculairement par rapport à la paroi verticale 102 du véhicule de loisirs (figure 4).

La première face 18a de l'armature supérieure 16 est agencée globalement verticalement, lorsque l'armature supérieure 16 est en position relevée, de sorte à former un dossier de siège. La première face 18a de l'armature supérieure 16 est en outre ici agencée vers l'avant du véhicule de loisirs 100 suivant la direction longitudinale L, lorsque l'armature supérieure 16 est en position relevée.

On entend par « globalement verticalement » le fait que la première face 18a de l'armature supérieure 16 est agencée verticalement à 30° près autour de l'axe de pivotement 17 de l'armature supérieure 16, un dossier légèrement incliné par rapport à la verticale pouvant être plus confortable pour un utilisateur.

La première face 18a de l'armature supérieure 16 est agencée en regard du premier caisson 11, lorsque l'armature supérieure 16 est en position rabattue (figure 2). La première face 18a de l'armature supérieure 16 peut encore être agencée horizontalement, vers le bas, en regard du premier caisson 11, lorsque l'armature supérieure 16 est en position rabattue.

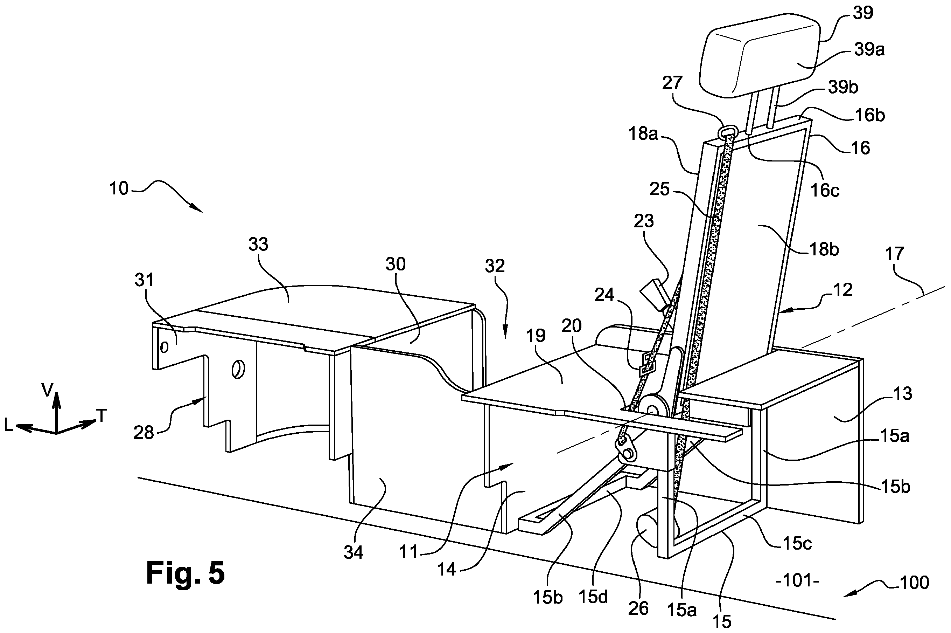

L'armature supérieure 16 comprend aussi une deuxième face plane 18b, opposée à la première face 18a (figures 2 et 5). La deuxième face 18b de l'armature supérieure 16 est en outre ici agencée vers l'arrière du véhicule de loisirs 100 suivant la direction longitudinale L, lorsque l'armature supérieure 16 est en position relevée.

La deuxième face 18b est agencée perpendiculairement par rapport à la paroi verticale 102 du véhicule de loisirs 100. Les première et deuxième faces 18a, 18b peuvent encore être parallèles entre elles.

La deuxième face 18b de l'armature supérieure 16 est agencée horizontalement et orientée dans une direction opposée au premier caisson 11, vers le haut, lorsque l'armature supérieure 16 est en position rabattue, de sorte à former une assise de banquette.

Ainsi, la première face 18a de l'armature supérieure 16 forme un dossier de siège, lorsque l'armature supérieure 16 est en position relevée (figure 4), et la deuxième face 18b de l'armature supérieure 16 forme une assise de banquette, lorsque l'armature supérieure 16 est position rabattue (figure 2).

L'armature inférieure 15 comprend par exemple deux paires 15a, 15b de pieds.

Les pieds de la première paire 15a s'étendent verticalement et perpendiculairement par rapport à l'axe de pivotement 17 de l'armature supérieure 16, chacun entre une extrémité inférieure en appui sur le plancher 101 du véhicule de loisirs 100 et une extrémité supérieure sur laquelle l'armature supérieure 16 est montée pivotante autour de l'axe de pivotement 17.

Les pieds de la première paire 15a sont par exemple reliés l'un à l'autre, au niveau de leur extrémité inférieure, par l'intermédiaire d'une traverse 15c.

Les pieds de la deuxième paire 15b s'étendent parallèlement l'un par rapport à l'autre et perpendiculairement par rapport à l'axe de pivotement 17 de l'armature supérieure 16, entre une extrémité inférieure en appui sur le plancher 101 du véhicule de loisirs 100 et une extrémité supérieure par laquelle ils sont chacun fixés, par exemple au moyen d'un ou plusieurs assemblages boulonnés, sur l'un des pieds de la première paire 15a.

Les pieds de la deuxième paire 15b sont outre inclinés par rapport à la direction verticale V.

Les pieds de la deuxième paire 15b sont par exemple reliés l'un à l'autre, au niveau de leur extrémité inférieure, par l'intermédiaire d'une traverse 15d.

De cette manière, l'armature inférieure 15 prend peu de place dans l'espace intérieur du premier caisson 11.

Il est ainsi possible de se servir de cet espace intérieur comme premier espace de stockage pour y stocker un réservoir d'eau, des effets personnels d'un ou des utilisateurs, des éléments de chauffages ou encore des appareils électriques, tels que des transformateurs, des disjoncteurs, etc.

Le premier caisson 11 comprend en outre une paroi supérieure 19 horizontale refermant le premier caisson 11 et à travers laquelle s'étend l'armature supérieure 16, notamment via une ouverture 20 formée dans la paroi supérieure 19 du premier caisson 19 (figures 4 et 5).

La paroi supérieure 19 du premier caisson 11 définit avec les parois 13, 14 du premier caisson 11 et le cas échéant avec la paroi verticale 102 du véhicule de loisirs 100 et/ou la paroi du meuble 103 l'espace intérieur du premier caisson 11.

La paroi supérieure 19 et les parois 13, 14 du premier caisson 11 sont solidaires entre elles. Elles ne bougent pas entre elles.

L'armature inférieure 15 est fixe par rapport à la paroi supérieure 19 du premier caisson 11.

La paroi supérieure 19 du premier caisson 11 forme une assise de siège, lorsque l'armature supérieure 16 est en position relevée (figures 4 et 5).

La paroi supérieure 19 du premier caisson 11 est en outre agencée en regard de la première face 18a de l'armature supérieure 16, lorsque l'armature supérieure 16 est en position rabattue (figure 2).

Dans la position rabattue, l'armature supérieure 16 peut reposer ou encore être en appui sur la paroi supérieure 19 du premier caisson 11. En variante, l'armature supérieure 16 peut être agencée distance de la paroi supérieure 19 du premier caisson 11 et donc ne pas être en appui contre ladite paroi supérieure 19 dans cette position.

L'armature supérieure 16 fait ainsi saillie, à l'extérieur du premier caisson 11, depuis la paroi supérieure 19 hors du premier caisson 11, que l'armature supérieure 16 soit en position rabattue ou en position relevée (figures 3 à 5).

De cette manière, lorsque l'armature supérieure 16 est en position relevée, la première face 18a de l'armature supérieure 16 forme un dossier de siège tandis que la paroi supérieure 19 du premier caisson 11 forme une assise de siège, le siège convertible 10 étant alors dans sa configuration de siège.

Le siège convertible 10 est par exemple utilisé en configuration de siège, lorsque le véhicule de loisirs 100 roule.

Lorsque l'armature supérieure 16 est en position rabattue, la deuxième face 18b de l'armature supérieure 16 forme une assise de banquette, le siège convertible étant alors dans sa configuration de banquette (figures 1 et 2).

Le siège convertible 10 est par exemple utilisé en configuration de banquette, lorsque le véhicule de loisirs 100 est à l'arrêt.

Ainsi, la paroi supérieure 19 du premier caisson 11 permet au siège convertible 10 de passer de la configuration de banquette à la configuration de siège par un simple pivotement de l'armature supérieure 16 de la position rabattue à la position relevée.

En effet, le premier caisson 11 comprenant une paroi supérieure 19 formant une assise de siège, lorsque l'armature supérieure 16 est en position relevée, l'utilisateur n'a pas besoin de rapporter lui-même, sur le premier caisson 11, une assise de siège refermant le premier caisson 11. Cela permet de limiter les risques que l'assise de siège bascule par rapport au premier caisson 11, à l'intérieur ou à l'extérieur de ce dernier, lorsque l'utilisateur a mal centré l'assise de siège au-dessus du premier caisson 11.

Le siège convertible 10 présente donc une sécurité améliorée pour les utilisateurs.

Par ailleurs, le nombre de manipulations à effectuer par l'utilisateur afin de passer de la configuration de siège à la configuration de banquette du siège convertible 10 est limité, de sorte que le siège convertible 10 est aussi particulièrement pratique et facile à manipuler pour les utilisateurs.

Le siège convertible 10 peut encore comprendre un premier et/ou un deuxième coussins 21, 22 amovibles ou encore séparables. Les premier et deuxième coussins 21, 22 sont libres en mouvement par rapport aux autres composants du siège convertible 10 et le cas échéant par rapport aux autres composants du véhicule de loisirs 100.

Le premier coussin 21 est conçu pour être placé sur la deuxième face 18b de l'armature supérieure 16, lorsque l'armature supérieure 16 est en position rabattue, le premier coussin 21 faisant alors fonction de coussin d'assise de banquette et formant avec la deuxième face 18b de l'armature supérieure 16 et la paroi supérieure 19 du premier caisson 11 l'assise de banquette (figure 1).

Le deuxième coussin 22 est conçu pour être placé contre la paroi verticale 102 du véhicule de loisirs 100, en regard du premier coussin 21, lorsque l'armature supérieure 16 est en position rabattue, le deuxième coussin 22 faisant alors fonction de coussin de dossier de banquette et formant avec la paroi verticale 102 du véhicule de loisirs 100 un dossier de banquette (figures 1 et 2).

Lorsque l'armature supérieure 16 est en position rabattue, que le premier coussin 21 est placé sur la deuxième face 18b de l'armature supérieure 16 et que le deuxième coussin 22 est placé contre la paroi verticale 102 du véhicule de loisirs 100, le siège convertible 10 est dans sa configuration de banquette (figures 1 et 2).

Le premier coussin 21 est encore conçu pour être placé sur la paroi supérieure 19 du premier caisson 11, lorsque l'armature supérieure 16 est en position relevée, de sorte à faire fonction de coussin d'assise de siège et former avec la paroi supérieure 19 du premier caisson 11 l'assise de siège (figure 3).

Le deuxième coussin 22 est aussi conçu pour être placé contre la première face 18a de l'armature supérieure 16, lorsque l'armature supérieure 16 est en position relevée, de sorte à faire fonction de coussin de dossier de siège et à former avec la première face 18a de l'armature supérieure 16 le dossier de siège (figure 3).

Lorsque l'armature supérieure 16 est en position relevée, que le premier coussin 21 est placé sur la face supérieure 19 du premier caisson 11 et que le deuxième coussin 22 est placé contre la première face 18a de l'armature supérieure 16, le siège convertible 10 est dans sa configuration de siège (figure 3).

Le premier et/ou le deuxième coussins 21, 22 présentent par exemple une forme globalement parallélépipédique.

Le premier coussin 21 comprend par exemple un bord pourvu d'un bourrelet 21a s'étendant verticalement vers le haut, lorsque le premier coussin 21 est placé sur la deuxième face 18b de l'armature supérieure 16, l'armature supérieure 16 étant en position rabattue, ou sur la paroi supérieure 19 du premier caisson 11, l'armature supérieure 16 étant en position relevée (figures 1 et 3).

Le bord du premier coussin 21 pourvu du bourrelet 21a est par exemple agencé parallèlement à la direction longitudinale L, à distance de la paroi verticale 102 du véhicule de loisirs 100, lorsque l'armature supérieure 16 est en position rabattue et que le premier coussin 21 est placé sur la deuxième surface 17 de l'armature supérieure 16 (figure 1). Il peut en outre être agencé perpendiculairement à la direction longitudinale L, à distance de l'armature supérieure 16, lorsque l'armature supérieure 16 est en position relevée et que le premier coussin 21 est placé sur la paroi supérieure 19 du premier caisson 11 (figure 3).

Le siège convertible 10 peut encore comprendre un système de ceinture de sécurité (figures 3 à 6).

Le système de ceinture de sécurité comprend par exemple un boîtier 23 comprenant un mécanisme de verrouillage (non représenté) et un pêne 24 conçu pour s'engager dans le mécanisme de verrouillage du boîtier 23.

Le boîtier 23 peut en outre comprendre un organe de déverrouillage conçu pour libérer le pêne 24 du mécanisme de verrouillage du boîtier 23, lorsqu'un utilisateur agit dessus.

Le boîtier 23 est fixé sur l'armature inférieure 15, d'un premier côté d'un plan P vertical, perpendiculaire à l'axe de pivotement 17 de l'armature supérieure 16, notamment sur l'extrémité supérieure du pied de la première paire 15a de pieds agencé du premier côté du plan P.

Le boîtier 23 est par exemple relié à l'armature inférieure 15 par l'intermédiaire d'une portion de sangle, laquelle peut être assemblée à l'armature inférieure 15 au moyen d'un assemblage boulonné.

Le système de ceinture de sécurité comprend encore une sangle 25 sur laquelle le pêne 24 est monté coulissant.

Pour cela, le pêne 24 est par exemple solidaire d'une boucle comportant une fente recevant la sangle 25.

La sangle 25 est fixée à chacune de ses première et deuxième extrémités sur l'armature inférieure 15 d'un deuxième côté du plan P.

La première extrémité de la sangle 25 est par exemple fixée sur l'extrémité inférieure du pied de la première paire 15a de pieds agencé du deuxième côté du plan P ou de la traverse 15c reliant la première paire 15a de pieds, du deuxième côté du plan P.

La deuxième extrémité de la sangle 25 est par exemple fixée sur l'extrémité supérieure du pied de la première paire 15a de pied agencé du deuxième côté du plan P.

Le système de ceinture de sécurité peut encore comprendre un enrouleur 26 par l'intermédiaire duquel la première extrémité de la sangle 25 est montée sur l'armature inférieure 15, la première extrémité de la sangle 25 étant enroulée autour de l'enrouleur 26 (figures 5 et 6).

Le système de ceinture de sécurité peut aussi comprendre un guide de sangle 27 monté sur l'armature supérieure 16 du deuxième côté du plan P et recevant la sangle 25 en coulissement entre ses première et deuxième extrémités.

Pour cela, le guide 27 comprend par exemple une fente recevant la sangle 25 et à travers laquelle la sangle 25 est libre de coulisser (figures 2 à 6).

Le guide 27 est par exemple monté sur un bord supérieur 16b de l'armature supérieure 16, parallèle à l'axe de pivotement 17.

Le système de ceinture de sécurité permet ainsi d'assurer la sécurité de l'utilisateur assis dans le siège convertible 10 en configuration de siège, lorsque le véhicule de loisirs 100 roule.

La paroi supérieure 19 du premier caisson 11 peut en outre comprendre un logement sur sa face supérieure afin d'accueillir le boîtier 23 du système de ceinture de sécurité, lorsque le siège convertible 10 est en configuration de banquette (figure 4).

Le siège convertible 10 peut encore comprendre un deuxième caisson 28 attenant à la paroi verticale 102 du véhicule de loisirs 100.

Le deuxième caisson 28 est agencé en regard et à distance du premier caisson 11, ici à l'avant suivant la direction longitudinale L, de sorte à former un espace libre 32 entre les premier et deuxième caissons 11, 28, l'espace libre 32 étant au moins en partie recouvert par l'armature supérieure 16, lorsque l'armature supérieure 16 est en position rabattue (figure 2).

Le deuxième caisson 28 comprend par exemple des parois 29, 30, 31 s'étendant globalement verticalement, la paroi verticale 102 du véhicule de loisirs 100 définissant ou délimitant avec les parois 29, 30, 31 un espace intérieur du deuxième caisson 28 (figures 1 à 5).

Le deuxième caisson 28 comprend par exemple une première paroi 29 latérale agencée parallèlement à la paroi verticale 102 du véhicule de loisirs 100 et une deuxième paroi 30 transversale agencée perpendiculairement à la première paroi 29 et reliant la première paroi 29 à la paroi verticale 102 du véhicule de loisirs 100 (figure 5).

La deuxième paroi 30 est agencée en regard et à distance de la deuxième paroi latérale 12 du premier caisson 11, ici à l'avant suivant la direction longitudinale L.

Le deuxième caisson 28 peut en outre comprendre une troisième paroi 31 transversale agencée parallèlement à la deuxième paroi 30, d'un côté opposé du premier caisson 11 par rapport à la deuxième paroi 30, et reliant la première paroi 29 à la paroi verticale 102 du véhicule de loisirs 100.

Le coin formé entre les première et troisième parois 29, 31 peut en outre être arrondi.

Le deuxième caisson 28 comprend en outre une paroi supérieure 33 horizontale, refermant notamment le deuxième caisson 28 (figures 2 à 5).

La paroi supérieure 33 du deuxième caisson 28 définit avec les parois latérales 29, 30, 31 du deuxième caisson 28 et le cas échéant la paroi verticale 102 du véhicule de loisirs 100 l'espace intérieur du deuxième caisson 28.

La paroi supérieure 33 du deuxième caisson 28 présente une face supérieure plane horizontale agencée dans un même plan que la deuxième face 18b de l'armature supérieure 16, lorsque l'armature supérieure 16 est en position rabattue, la paroi supérieure 33 du deuxième caisson 28 formant alors avec la deuxième face 18b de l'armature supérieure 16 une assise de banquette (figure 2).

De cette manière, le siège convertible 10 propose une plus grande banquette, lorsque le siège convertible est en configuration de banquette, cela en tirant notamment partie d'un deuxième espace de stockage correspondant à l'espace intérieur du deuxième caisson 28. Ce deuxième espace de stockage peut par exemple accueillir un réservoir d'eau, des effets personnels d'un ou des utilisateurs, des éléments de chauffages ou encore des appareils électriques, tels que des transformateurs, des disjoncteurs, etc.

En outre, en configuration de siège, l'espace libre 32 entre les premier et deuxième caissons 11, 28 permet à l'utilisateur assis sur le siège d'y placer ses jambes (figures 3 à 5).

Le siège convertible 10 peut encore comprendre une paroi de raccordement 34 verticale destinée à être agencée parallèlement et en regard de la paroi verticale 102 du véhicule de loisirs 100 (figures 2 à 5).

La paroi de liaison 34 relie entre elles les deuxièmes parois 14 et 30 des premier et deuxième caissons 11, 28, de sorte que la paroi de liaison 34 et les deuxièmes parois 14, 30 des premier et deuxième caissons 11, 28 définissent ensemble l'espace libre 32 entre les premier et deuxième caissons 11, 28.

Le siège convertible 10 peut aussi comprendre un volet 35 monté pivotant sur le premier caisson 11, notamment sur la deuxième paroi 14 du premier caisson 11, autour d'un axe de pivotement 36 vertical, entre une position de fermeture (figure 1) dans laquelle le volet 35 ferme, transversalement par rapport à la direction longitudinale L, l'accès à l'espace libre 32 et une position d'ouverture (figures 2 à 5) dans laquelle le volet 35 libère l'accès à l'espace libre 32.

Avantageusement, le volet 35 est en position d'ouverture, lorsque l'armature supérieure 16 est en position relevée, et en position et de fermeture, lorsque l'armature supérieure 16 est en position rabattue.

De cette manière, le volet 35 est en position de fermeture, lorsque le siège convertible 10 est en configuration de banquette, l'accès à l'espace libre 32 entre les premier et deuxième caissons 11, 28 n'étant pas nécessaire (figure 1).

Le volet 35 est en position d'ouverture, lorsque le siège convertible 10 est en configuration de siège, l'accès à l'espace libre 32 entre les premier et deuxième caissons 11, 28 étant nécessaire pour que l'utilisateur assis dans le siège convertible 10 place ses jambes dans l'espace libre 32, sans avoir à enjamber le volet 35 (figures 3 à 5).

Le volet 35 est par exemple agencé d'un côté opposé de la paroi verticale 102 du véhicule de loisirs 100 par rapport à la paroi de liaison 34.

Le volet 35, le cas échéant la paroi de liaison 34, et les deuxièmes parois 14, 30 des premier et deuxième caissons 11, 28 définissant ensemble l'espace libre 32 entre les premier et deuxième caissons 11, 28.

Le volet 35 est par exemple agencé contre la deuxième paroi 14 du premier caisson 11, lorsque le volet 35 est en position d'ouverture.

En variante, le volet 35 est monté pivotant sur le deuxième caisson 28, notamment sur la deuxième paroi latérale 30 du deuxième caisson 28, autour d'un axe de pivotement vertical, entre les positions de fermeture et d'ouverture.

Le siège convertible 10 peut aussi comprendre un troisième et/ou un quatrième coussin 37, 38 amovibles ou encore séparables (figures 1 et 2). Les troisième et quatrième coussins 37, 38 sont libres en mouvement par rapport aux autres composants du siège convertible 10 et le cas échéant par rapport aux autres composants du véhicule de loisirs 100.

Le troisième coussin 37 est conçu pour être placé en partie sur la paroi supérieure 33 du deuxième caisson 28 et en partie sur la deuxième face 18b de l'armature supérieure 16, lorsque l'armature supérieure 16 est en position rabattue, le troisième coussin 37 faisant fonction de coussin d'assise de banquette et formant avec la paroi supérieure 33 du deuxième caisson 28 et la deuxième face 18b de l'armature supérieure 16 l'assise de banquette.

Le quatrième coussin 38 est conçu pour être placé contre la paroi verticale 102 du véhicule de loisirs 100, en regard du troisième coussin 37, lorsque l'armature supérieure 16 est en position rabattue, le quatrième coussin 38 faisant fonction de coussin de dossier de banquette et formant avec la paroi verticale 102 du véhicule de loisirs 100 le dossier de banquette.

Lorsque l'armature supérieure 16 est en position rabattue, que le troisième coussin 37 est placé sur la paroi supérieure 33 du deuxième caisson 28 et la deuxième face 18b de l'armature supérieure 16 et que le quatrième coussin 38 est placé contre la paroi verticale 102 du véhicule de loisirs 100, le siège convertible 10 est dans la configuration de banquette.

Le troisième et/ou les quatrièmes coussins 37, 38 rendent les configurations de banquette plus confortable pour les utilisateurs.

Les troisième et quatrième coussins 37, 38 présentent par exemple une forme globalement parallélépipédique.

Le troisième coussin 37 comprend par exemple un bord pourvu d'un bourrelet 37a s'étendant verticalement vers le haut, lorsque le premier coussin 37 est placé en partie sur la deuxième face 18b de l'armature supérieure 16 et en partie sur la paroi supérieure 33 du deuxième caisson 28, l'armature supérieure 16 étant en position rabattue.

Le bord du troisième coussin 37 pourvu du bourrelet 37a est par exemple agencé parallèlement à la direction longitudinale L, à distance de la paroi verticale 102 du véhicule de loisirs 100, lorsque l'armature supérieure 16 est en position rabattue et que le troisième coussin 37 est placé en partie sur la deuxième face 18b de l'armature supérieure 16 et en partie sur la paroi supérieure 33 de la deuxième face 18b de l'armature supérieure 16.

Le bord du troisième coussin 37 pourvu du bourrelet 37a s'étend par exemple dans le prolongement du bord du premier coussin 21 lui-même pourvu d'un bourrelet 21a, lorsque l'armature supérieure 16 est en position rabattue, que le premier coussin 21 est placé sur la deuxième face 18b de l'armature supérieure 18 et que le troisième coussin 37 est placé en partie sur la deuxième face 18b de l'armature supérieure 16 et en partie sur la paroi supérieure 33 de la deuxième face 18b de l'armature supérieure 16.

Une face supérieure de la paroi supérieure 19 du premier caisson 11 et/ou la face supérieure de la paroi supérieure 33 du deuxième caisson 28 peuvent encore être pourvues de moyens réversibles de fixation (non représentés) avec le premier coussin 21 et le troisième coussin 37.

Pour cela, la face supérieure de la paroi supérieure 19 du premier caisson 11 et/ou la face supérieure de la paroi supérieure 33 du deuxième caisson 28 comprennent une ou plusieurs bandes à boucles ou à crochets conçues pour coopérer avec une ou plusieurs bandes à crochets ou à boucles agencées sur la face du premier et/ou du troisième coussins 21, 37 venant en appui contre la face supérieure de la paroi supérieure 19 du premier caisson 11, lorsque l'armature supérieure est en position relevée, ou la face supérieure de la paroi supérieure 33 du deuxième caisson 28, lorsque l'armature supérieure 16 est en position rabattue.

De cette manière, le premier et/ou les troisièmes coussins 21, 37 ne risquent pas de glisser sur la face supérieure de la paroi supérieure 19 du premier caisson 11 ou sur la face supérieure de la paroi supérieure 33 du deuxième caisson 28. Cela évite aux utilisateurs d'avoir à repositionner le premier et/ou les troisièmes coussins 21, 37.

Le siège convertible 10 peut encore comprendre un appui-tête 39 monté sur l'armature supérieure 16, notamment sur le bord supérieure 16b de l'armature supérieure 16 (figures 1 à 6).

L'appui-tête 39 comprend une face plane 39a agencée dans un même plan que la deuxième face 18b de l'armature supérieure 16 (figures 2 et 5).

De cette manière, lorsque l'armature supérieure 16 est en position rabattue, la deuxième face 18b de l'armature supérieure 16 et la face 39a de l'appui-tête 39 forment ensemble l'assise de banquette (figure 2).

Ainsi, il n'est pas nécessaire de démonter l'appui-tête entre les configurations de siège et de banquette du siège convertible 10.

Par ailleurs, le troisième coussin 37 est par exemple conçu pour être placé en partie sur la deuxième face 18b de l'armature supérieure 16, en partie sur la face 39a de l'appui-tête 39 et en partie sur la paroi supérieure 33 du deuxième caisson 28, lorsque l'armature supérieure 16 est en position rabattue.

L'appui-tête 39 comprend par exemple un coussin logeant une structure d'appui-tête (non représentée) et une paire de tiges 39b s'étendant parallèlement depuis la structure d'appui-tête et faisant saillie à l'extérieur du coussin.

La paire de tiges 39b est insérée dans des ouvertures 16c prévues à cet effet dans l'armature supérieure 16, notamment dans le bord supérieur 16b de l'armature supérieure 16.

Le siège convertible 10 peut aussi comprendre deux coussins supplémentaires 40, 41 de forme allongée, conçus pour être agencés de part et d'autre, suivant la direction longitudinale L, de l'ensemble formé par le premier et le troisième coussins 21, 37, lorsque l'armature supérieure 16 est en position rabattue, que le premier coussin 21 est agencé sur la paroi supérieure 19 du premier caisson 11 et que le troisième coussin 37 est en partie agencé sur la deuxième face 18b de l'armature supérieure 16 et en partie sur la paroi supérieure 33 du deuxième caisson 28 (figures 1 et 2).

Les coussins supplémentaires 40, 41 forment ainsi des accoudoirs, lorsque le siège convertible 10 est en configuration de banquette.

Le siège convertible 10 décrit ci-dessus est particulièrement avantageux car il est particulièrement simple à manipuler pour passer de la configuration de siège à la configuration de banquette. Il est en outre plus sécuritaire pour les utilisateurs.

## Revendications

1. Siège convertible (10) pour véhicule de loisirs (100) comprenant :
- un premier caisson (11) comprenant des parois (13, 14) s'étendant globalement verticalement, le premier caisson (11) étant destiné à être attenant à une paroi globalement verticale (102) du véhicule de loisirs (100), de sorte à délimiter avec les parois (13, 14) du premier caisson un espace intérieur du premier caisson (11),
- une armature (12) comprenant une armature inférieure (15) au moins en partie logée dans l'espace intérieur du premier caisson (11) et une armature supérieure (16) comprenant une première et une deuxième faces (18a, 18b) planes et opposées, l'armature supérieure (16) étant montée pivotante sur l'armature inférieure (15) autour d'un axe de pivotement (17) horizontal entre une position relevée et une position rabattue, la première face (18a) étant agencée globalement verticalement, lorsque l'armature supérieure (16) est en position relevée, de sorte à former un dossier de siège, la deuxième face (18b) étant agencée horizontalement et orientée dans une direction opposée au premier caisson (11), lorsque l'armature supérieure (16) est en position rabattue, de sorte à former une assise de banquette,
le siège convertible (10) étant **caractérisé en ce que** le premier caisson (11) comprend une paroi supérieure (19) horizontale refermant le premier caisson (11) et à travers lequel s'étend l'armature supérieure (16), la paroi supérieure (19) formant une assise de siège, lorsque l'armature supérieure (16) est en position relevée, et étant agencée en regard de la première face (18a) de l'armature supérieure (16), lorsque l'armature supérieure (16) est en position rabattue par-dessus la paroi supérieure (19) du premier caisson (11).

2. Siège convertible (10) selon la revendication 1, comprenant un premier coussin (21) amovible conçu :
- pour être placé sur la deuxième face (18b) de l'armature supérieure (16), lorsque l'armature supérieure (16) est en position rabattue, de sorte à former un coussin d'assise de banquette,
et/ou
- pour être placé sur la paroi supérieure (19) du premier caisson (11), lorsque l'armature supérieure (16) est en position relevée, de sorte à former un coussin d'assise de siège.

3. Siège convertible (10) selon la revendication 1 ou la revendication 2, comprenant un deuxième coussin (22) amovible :
- destiné à être placé contre la paroi verticale (102) du véhicule de loisirs (100), lorsque l'armature supérieure (16) est en position rabattue, de sorte à former un coussin de dossier de banquette,
et/ou
- conçu pour être placé contre la première face (18a) de l'armature supérieure (16), lorsque l'armature supérieure (16) est en position relevée, de sorte à former un coussin de dossier de siège.

4. Siège convertible (10) selon l'une des revendications 1 à 3, dans lequel l'armature (12) comprend un système de ceinture de sécurité.

5. Siège convertible (10) selon la revendication 4, dans lequel le système de ceinture de sécurité comprend :
- un boîtier (23) comprenant un mécanisme de verrouillage, le boîtier (23) étant fixé sur l'armature inférieure (15), d'un premier côté d'un plan (P) vertical, perpendiculaire à l'axe de pivotement (17) de l'armature supérieure (16),
- un pêne (24) conçu pour s'engager avec le mécanisme de verrouillage du boîtier (23),
- une sangle (25) sur laquelle le pêne (24) est monté coulissant, la sangle (25) étant fixée à chacune de ses première et deuxième extrémités sur l'armature inférieure (15) d'un deuxième côté du plan vertical.

6. Siège convertible (10) selon la revendication 5, dans lequel le système de ceinture de sécurité comprend :
- un enrouleur (26) par l'intermédiaire duquel la première extrémité de la sangle (25) est fixée sur l'armature inférieure (15), la première extrémité de la sangle (25) étant enroulée autour de l'enrouleur (26),
et/ou
- un guide de sangle (27) monté sur l'armature supérieure (16), notamment sur un bord supérieur (16b) de l'armature supérieure (16), du deuxième côté du plan (P), et recevant la sangle (25) en coulissement entre ses première et deuxième extrémités.

7. Siège convertible (10) selon l'une des revendications 1 à 6, comprenant un deuxième caisson (28) destiné à être attenant à la paroi verticale (102) du véhicule de loisirs (100), le deuxième caisson (28) étant agencé en regard et à distance du premier caisson (11) suivant une direction longitudinale (L) horizontale, de sorte à former un espace libre (32) entre les premier et deuxième caissons (11, 28), cet espace libre étant au moins en partie recouvert par l'armature supérieure (16), lorsque l'armature supérieure (16) est en position rabattue.

8. Siège convertible (10) selon la revendication 7, dans lequel le deuxième caisson (28) comprend une paroi supérieure (33) horizontale présentant une face supérieure plane agencée dans un même plan que la deuxième face (18b) de l'armature supérieure (16), lorsque l'armature supérieure (16) est en position rabattue, de sorte que la paroi supérieure (33) du deuxième caisson (28) forme une assise de banquette avec la deuxième face (18b) de l'armature supérieure (16).

9. Siège convertible (10) selon la revendication 7 ou la revendication 8, comprenant un volet (35) monté pivotant sur le premier caisson (11) autour d'un axe de pivotement (36) vertical entre une position de fermeture dans laquelle le volet (35) ferme, transversalement par rapport à la direction longitudinale (L), l'accès à l'espace libre (32) et une position d'ouverture dans laquelle le volet (35) libère l'accès à l'espace libre (32).

10. Siège convertible (10) selon l'une quelconque des revendications 7 à 9, comprenant en outre un troisième coussin (37) amovible conçu pour être placé en partie sur la paroi supérieure (33) du deuxième caisson (28) et en partie sur la deuxième face (18b) de l'armature supérieure (16), lorsque l'armature supérieure (16) est en position rabattue, de sorte à former un coussin d'assise de banquette.

11. Siège convertible (10) selon l'une quelconque des revendications 1 à 10, comprenant en outre un appui-tête (39) monté sur l'armature supérieure (16), l'appui-tête comprenant une face (39a) plane agencée dans un même plan que la deuxième face (18b) de l'armature supérieure (16), de sorte que lorsque l'armature supérieure (16) est en position rabattue, la deuxième face (18b) de l'armature supérieure (16) et la face (39a) de l'appui-tête (39) forment ensemble une assise de banquette.

12. Véhicule de loisirs (100) comprenant une paroi globalement verticale (102) et un siège convertible (10) selon l'une quelconque des revendications 1 à 11.
